**Europäisches Patentamt**

**European Patent Office**

**Office européen des brevets**

(19)

(11) Veröffentlichungsnummer : **0 260 570 B1**

# EUROPÄISCHE PATENTSCHRIFT

(12)

(45) Veröffentlichungstag der Patentschrift :
**05.06.91 Patentblatt 91/23**

(51) Int. Cl.⁵ : **H02K 13/04,** H02K 3/38

(21) Anmeldenummer : **87113061.3**

(22) Anmeldetag : **07.09.87**

(54) Verfahren zur Herstellung eines Kommutatormotors mit einer Isolierabdeckung der Rotorwelle.

(30) Priorität : **19.09.86 DE 3631943**

(43) Veröffentlichungstag der Anmeldung :
**23.03.88 Patentblatt 88/12**

(45) Bekanntmachung des Hinweises auf die
Patenterteilung :
**05.06.91 Patentblatt 91/23**

(84) Benannte Vertragsstaaten :
**AT CH DE ES FR GB IT LI NL SE**

(56) Entgegenhaltungen :
**DE-U- 7 931 678**

(56) Entgegenhaltungen :
DE-U- 8 428 085
FR-A- 1 549 359
FR-A- 2 170 835
US-A- 3 213 307
PATENT ABSTRACTS OF JAPAN, Band 5, Nr.
109 (E-65) [781], 15. Juli 1981; & JP-A-56 49 651
(HITACHI SEISAKUSHO K.K.) 06-05-1981

(73) Patentinhaber : **Siemens Aktiengesellschaft
Wittelsbacherplatz 2
W-8000 München 2 (DE)**

(72) Erfinder : **Reisenweber, Walter, Dipl.-Ing. (FH)
Im Weingarten 8
W-8744 Mellrichstadt (DE)**

**Beschreibung**

Die Erfindung bezieht sich auf ein Verfahren zur Herstellung eines Kommutatormotors mit einer Isolierabdeckung der Rotorwelle gemäß Oberbegriff des Anspruchs 1 ; ein derartiges Verfahren ist durch eine offenkundige Vorbenutzung allgemein bekannt.

Zur Erzielung eines definierten Axialspiels bei der Rotorlagerung eines Kleinmotors sollte das axiale Abstandsmaß zwischen der axial äußeren Stirnseite des Kommutators und der kommutatorabgewandten Rotorpaket-Stirnseite bzw. der gegebenenfalls diese Stirnseite abdeckenden, z.B. durch das DE-GM 18 38 776 bekannten, Isolierendscheibe unter Berücksichtigung der jeweiligen Toleranzen der das Abstandsmaß bestimmenden Einzelbauteile konstant sein. Dies bedingt, daß nach der Befestigung des Rotorpaketes auf der Rotorwelle und gegebenenfalls dem Aufstecken der Isolierendscheiben der Kommutator dem Toleranzausgleich entsprechend unterschiedlich axial tief auf das unisolierte Rotorwellenende aufgedrückt wird ; es verbleibt dann in der Regel ein von Motor zu Motor unterschiedlich großer, in jedem Einzelfall von den Toleranzen der montierten Rotorbauteile abhängiger, an sich unisolierter Rotorwellenbereich zwischen der einen Rotorpaket-Stirnseite und der gegenüberliegenden Kommutator-Stirnseite. Wenn insbesondere bei Kontaktierung des Kommutators in der sogenannten Backside-Wickeltechnik, vorzugsweise im Zusammenhang mit geschränkten Rotorblechpaketen, die Gefahr besteht, daß dieser blanke Rotorwellenbereich von den Wicklungsdrähten zwischen den Wicklungsköpfen der Rotorwicklung und den Haken des Kommutators berührt wird, muß dieser Rotorwellenbereich an seinem äußeren Umfang elektrisch isoliert werden, was im bekannten Fall nach der abstandsgenauen Festlegung des Kommutators durch manuelles Umwickeln des blanken Rotorwellenbereiches mit Isolierband geschieht.

Durch das deutsche Gebrauchsmuster 79 31 678 ist ein Induktionsmotor bekannt, dessen Schleifringe auf eine Hülse aufgesteckt sind, die ihrerseits auf die Rotorwelle aufgedrückt ist. Die als Träger für die beiden Schleifringe dienende Hülse ist in ihren axial äußeren Bereichen mit einer verdünnten Wandstärke versehen, die sich beim axialen Stauchen der Hülse zu Sicken verformen. Die axiale Stauchung erfolgt nach dem Befestigen der Schleifringe und vor dem Aufdrücken der Hülse auf die Rotorwelle. Durch die vorherige Ausformung der Sicken wird eine mechanische Beanspruchung der Schleifringe beim nachfolgenden Aufpressen der Hülse auf die Rotorwelle verhindert. Nach dem Aufpressen der Hülse verbleibt ein unisolierter Rotorwellenbereich zwischen dem einen Klauenpolrad und dem diesen zugewandten Endbereich der Hülse.

Aufgabe der vorliegenden Erfindung ist es, unter Aufrechterhaltung der hohen Betriebssicherheit eine einfache, insbesondere eine für eine Automatenfertigung geeignete elektrische Isolierung des zum Ausgleich von Toleranzen notwendigen Rotorwellenbereiches zu schaffen und dadurch den Montageaufwand wesentlich zu verringern.

Die Lösung dieser Aufgabe ist bei einem Verfahren der eingangs genannten Art erfindungsgemäß durch die kennzeichnenden Merkmale des Anspruchs 1 möglich ; vorteilhafte Ausgestaltungen des Verfahrens sind jeweils Gegenstand der Unteransprüche.

Bei dem erfindungsgemäßen Verfahren zur Herstellung eines Kommutatormotors ist es in insbesondere für eine Automatenfertigung vorteilhafter Weise möglich, die als Einheitsbauteil fertigbare Hülse mittels einer einfachen axialen Aufsteck-Automatenbewegung auf die Rotorwelle zu bringen und die Einheitsbauteil-Hülse in Anpassung an die von Motor zu Motor gegebenenfalls auftretenden unterschiedlichen Toleranzen in einem Arbeitsgang mit dem abstandsgenauen Aufdrücken des Kommutators entsprechend zu stauchen. Zweckmäßigerweise ist eine derartige Hülse als in Umfangsrichtung geschlossenes Bauteil ausgebildet, das axial auf die Rotorwelle gesteckt wird.

Die Zahl der Fertigungsschritte kann in vorteilhafter Weise dadurch weiter reduziert werden, daß die axial stauchbare Hülse an die Isolierendscheibe bzw. deren Kragen einstückig angeformt ist und somit gleichzeitig mit der Isolierendscheibe in einem Arbeitsgang montiert wird.

Durch die Verwendung einer Hülse, die mit einer gegenüber dem Kragen radial verringerten Wandstärke versehen ist, wird, insbesondere auch bei der fertigungstechnisch vorteilhaften Einstückigkeit, auf einfache und trotzdem sichere Weise eine eindeutige Funktionstrennung zwischen axial steifem Kragen einerseits und axial mit geringem Druck stauchbarer, längenanpaßbarer Hülse andererseits gewährleistet. Nach einer weiteren Ausgestaltung der Erfindung ist die axial stauchbare Hülse an ihrem kommutatorseitigen Ende mit einer gegenüber dem rotorpaketseitigen Ende geringeren radialen Wandstärke versehen, insbesondere in kontinuierlichem Übergang, so daß der gestauchte Hülsenteil im wesentlichen vor der Kommutator-Stirnseite liegt und somit die Wickelkopfbildung nicht behindern kann.

Das erfindungsgemäße Verfahren sowie weitere vorteilhafte Ausgestaltungen werden im folgenden anhand eines in der Zeichnung schematisch dargestellten Ausführungsbeispiels näher erläutert ; darin zeigen :

FIG 1 in einem axialen Längsschnitt eine Rotoranordnung eines Kommutatormotors mit einer an dem Kragen einer Isolierendscheibe einstückig angeformten, mit Aufschieben des Kommutators axial gestauchten Hülse ;

2

FIG 2 in einer genaueren Detailvergrößerung der FIG 1 einen axialen Längsschnitt durch die Isolierendscheibe mit Kragen und einstückig angeformter, axial stauchbarer Hülse ;

FIG 3 das kommutatorseitige Ende der Rotoranordnung gemäß FIG 1, jedoch vor der Stauchung der Hülse durch den aufzudrückenden Kommutator ;

FIG 4 das kommutatorseitige Ende der Rotoranordnung gemäß FIG 1 nach der Stauchung der Hülse durch den auf die Rotorwelle aufgedrückten Kommutator.

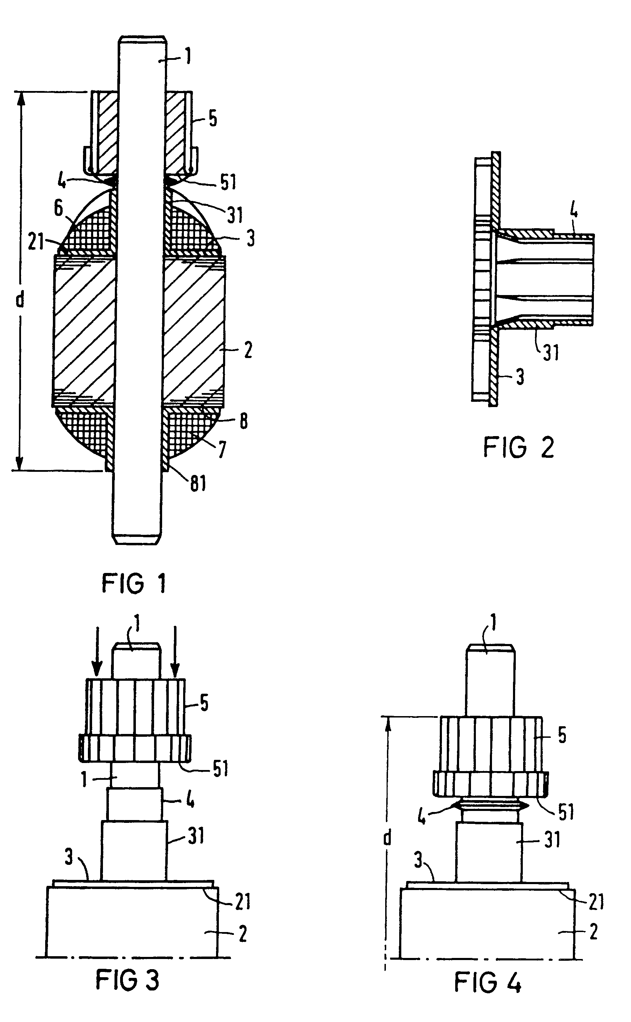

FIG 1 zeigt die Rotoranordnung eines Kommutatormotors. Die über hier nicht eingezeichnete Lager drehbar gelagerte Rotorwelle 1 trägt ein Rotorpaket 2 und einen Kommutator 5. An die Haken des Kommutators 5 sind Wicklungsenden der gewickelten Rotorwicklung angeschlossen, von der in FIG 1 die stirnseitigen Wickelköpfe 6,7 dargestellt sind. Von den Wicklungsverbindungen zum Kommutator sind in FIG 1 nur die Anschlüsse zu zwei Kommutatorhaken gezeigt ; aufgrund der hier vorgesehenen Backside-Wickeltechnik, für die sich das erfindungsgemäße Verfahren insbesondere eignet, ist ein aus einer Nut des Rotorpaketes 2 herausgeführter Wicklungsdraht zu einem Kommutatorhaken geführt, der einer etwa um 180° am Umfang versetzten Nut gegenüberliegt.

Zur elektrischen Isolierung der Wickelköpfe 6,7 gegenüber den Stirnseiten 21 des Rotorpakets 2 und gegenüber der Rotorwelle 1 radial unterhalb der Wickelköpfe 6,7 sind Isolierendscheiben 3,8 mit je einem axial angeformten, hülsenförmigen, die Rotorwelle 1 im Bereich der Wickelköpfe 6,7 umfassenden Kragen 31,81 vorgesehen. An das axial freie Ende des Kragens 31 der einen Isolierendscheibe 3 ist eine axial stauchbare Hülse 4 einstückig angeformt, die erfindungsgemäß zur Isolierung des verbleibenden blanken Rotorwellenbereiches zwischen dem Kommutator 5 und dem Kragen 31 dient und beim Aufdrücken des Kommutators 5 bis zum Längeneinbaumaß d zwischen den Lagerstellen durch axiales Stauchen in der Länge angepaßt wird.

FIG 2 zeigt in vergrößerter Detaildarstellung eine an den Kragen 31 der Isolierendscheibe 3 einstückig angeformte Hülse 4, deren radiale Wandstärke gegenüber der des Kragens 31 verringert ist.

FIG 3 und 4 zeigen in einem Teilausschnitt der Rotoranordnung gemäß FIG 1 den Vorgang des Aufschiebens des Kommutators 5 und der gleichzeitigen Stauchung der Hülse 4. FIG 3 zeigt den Zustand des gerade auf die Rotorwelle 1 aufgesteckten Kommutators 5, der in Pfeilrichtung auf die Hülse 4 zugeschoben wird ; beim weiteren axialen Aufdrücken wird dann die Hülse 4 gemäß FIG 4 selbsttätig gestaucht, bis der Kommutator 5 seine dem Längeneinbaumaß d entsprechende Endstellung erreicht hat.

**Ansprüche**

1. Verfahren zur Herstellung eins Kommutatormotors mit einer Isolierabdeckung der Rotorwelle (1) im Bereich zwischen der einen Rotorpaket-Stirnseite (21) und der gegenüberliegenden Kommutator-Stirnseite (51), **dadurch gekennzeichnet**, daß als Isolierabdeckung zwischen der Rotorpaket-Stirnseite(21) und der gegenüberliegenden Kommutator-Stirnseite (51) eine die Rotorwelle (1) umfassende, axial stauchbare Hülse (4) auf die Rotorwelle (1) aufgesteckt und in einem Arbeitsgang mit einem im Sinne eines Ausgleichs der jeweiligen Toleranzen abstandsgenauen Aufdrücken des Kommutators (5) auf die Rotorwelle (1) entsprechend mehr oder weniger gestaucht wird.

2. Verfahren zur Herstellung eines Kommutatormotors mit einer Isolierabdeckung der Rotorwelle (1) im Bereich zwischen einer, die Rotorpaket-Stirnseite (21) abdeckenden Isolierendscheibe (3) und der gegenüberliegenden Kommutator-Stirnseite (51) **dadurch gekennzeichnet**, daß als Isolierabdeckung zwischen der Isolierendscheibe (3) und der gegenüberliegenden Kommutator-Stirnseite (51) eine axial stauchbare Hülse (4) als getrenntes Bauteil auf die Rotorwelle (1) aufgesteckt und mit dem abstandgenauen Aufdrücken des Kommutators (5) gestaucht wird.

3. Verfahren zur Herstellung eines Kommutatormotors mit einer Isolierabdeckung der Rotorwelle (1) im Bereich zwischen einer die eine Rotorpaket-Stirnseite (21) abdeckenden Isolierendscheibe (3) mit einem angeformten, axial vorstehenden, hülsenförmigen, die Rotorwelle umfassenden Kragen (31) und der gegenüberliegenden Kommutator-Stirnseite (51), **dadurch gekennzeichnet**, daß als Isolierabdeckung zwischen dem die Rotorwelle (1) umfassenden Kragen (31) und der gegenüberliegenden Kommutator-Stirnseite (51) eine die Rotorwelle (1) umfassende axial stauchbare Hülse (4) als getrenntes Bauteil auf die Rotorwelle (1) aufgesteckt und mit dem abstandsgenauen Aufdrücken des Kommutators (5) gestaucht wird.

4. Verfahren nach einem der Ansprüche 1 bis 3, **dadurch gekennzeichnet**, daß als Isolierabdeckung eine in Umfangsrichtung geschlossene Hülse (4) auf die Rotorwelle (1) von deren freien Ende her axial aufgesteckt wird.

5. Verfahren nach Anspruch 2, **gekennzeichnet** durch die Verwendung einer einstückig an die Isolierendscheibe (3) angeformten axial stauchbaren Hülse (4).

6. Verfahren nach Anspruch 3, **gekennzeichnet** durch die Verwendung einer an den axial vorstehenden, die Rotorwelle (1) umfassenden Kragen (31) der Isolierendscheibe (3) einstückig angeformten axial stauchbaren Hülse (4).

7. Verfahren nach Anspruch 3 und/oder 6,

gekenn zeichnet durch die Verwendung einer axial stauchbaren Hülse (4) mit einer gegenüber dem Kragen (31) der Isolierendscheibe (3) radial verringerten Wandstärke.

8. Verfahren nach einem der Ansprüche 1 bis 7, gekenn zeichnet durch die Verwendung einer axial stauchbaren Hülse (4) mit einem an ihrem kommutatorseitigen Ende gegenüber ihrem am Kragen (31) der Isolierendscheibe (3) angeformten Teil versehenen geringeren radialen Wandstärke.

9. Verfahren nach Anspruch 8, gekennzeichnet durch die Verwendung einer axial stauchbaren Hülse (4) mit zwischen ihrem kommutatorseitigen Ende einerseits und ihrem rotorpaketseitigen Ende andererseits kontinuierlich veränderlichen radialen Wandstärke.

## Claims

1. A method for manufacturing a commutator motor with an insulating cover of the rotor shaft (1) in the region between one of the rotor laminated-core end faces (21) and the opposite commutator end face (51), characterised in that as insulating cover between the rotor laminated-core end face (21) and the"opposite commutator end face (51) an axially compressible sleeve (4) surrounding the rotor shaft is mounted on the rotor shaft (1) and in one operation is compressed correspondingly more or less, with the pressing of the commutator (5) onto the rotor shaft (1) at the correct distance relative to an adjustment of the respective tolerances.

2. A method for manufacturing a commutator motor with an insulating cover of the rotor shaft (1) in the region between an insulating end disc (3) covering the rotor laminated-core end face (21) and the opposite commutator end face (51), characterised in that as insulating cover between the insulating end disc (3) and the opposite commutator end face (51) an axially compressible sleeve (4) is inserted as separate component part on the rotor shaft (1) and is compressed with the pressing on of the commutator (5), at the correct distance.

3. A method for manufacturing a commutator motor with an insulating cover of the rotor shaft (1) in the region between an insulating end disc (3) covering a rotor laminated-core end face (21), with a preformed axially projecting sleeve-shaped collar (31) surrounding the rotor shaft, and the opposite commutator end face (51), characterised in that as insulating cover between the collar (31) surrounding the rotor shaft (1) and the opposite commutator end face (51), an axially compressible sleeve (4) surrounding the rotor shaft (1) is mounted on the rotor shaft (1) as a separate component and is compressed with the pressing on of commutator (5) at the correct distance.

4. A method according to one of claims 1 to 3, characterised in that as insulating cover a sleeve (4) closed in the peripheral direction is mounted axially on the rotor shaft (1) from the free end thereof.

5. A method according to claim 2, characterised by the use of an axially compressible sleeve, preformed in one piece on the insulating end disc (3).

6. A method according to claim 3, characterised by the use of an axially compressible sleeve (4), preformed in one piece on the axially projecting collar (31) of the insulating end disc (3), surrounding the rotor shaft (1).

7. A method according to claim 3 and/or 6, characterised by the use of an axially compressible sleeve (4) with a radially reduced wall thickness compared with the collar (31) of the insulating end disc (3).

8. A method according to one of claims 1 to 7, characterised by the use of an axially compressible sleeve (4) with a smaller radial wall thickness at its commutator end compared with the part preformed on the collar (31) of the insulating end disc (3).

9. A method according to claim 8, characterised by the use of an axially compressible sleeve (4) with continuously varying radial wall thickness between its commutator end, on the one hand, and its rotor laminated-core end, on the other hand.

## Revendications

1. Procédé pour fabriquer un moteur à collecteur, dont l'arbre (1) du rotor est recouvert par un revêtement isolant dans la zone comprise entre une face frontale (21) du paquet rotorique et la face frontale opposée (51) du collecteur, caractérisé par le fait qu'on emmanche sur l'arbre (1) du rotor, en tant que revêtement isolant entre la face frontale (21) du paquet rotorique et la face frontale opposée (51) du collecteur, une douille (4) qui entoure l'arbre (1) du rotor et peut être aplatie axialement, et que, lors d'une étape opératoire, on aplatit plus ou moins, de façon correspondante, cette douille sur l'arbre (1) du rotor au moyen d'un refoulement du collecteur (5) sur une distance précise en vue de compenser les tolérances respectives.

2. Procédé pour fabriquer un moteur à collecteur, dont l'arbre (1) du rotor comporte un revêtement isolant dans la zone située entre un disque d'extrémité isolant (3) recouvrant la face frontale (21) du paquet rotorique, et la face frontale opposée (51) du collecteur, caractérisé par le fait qu'on emmanche sur l'arbre (1) du rotor, en tant que revêtement isolant entre le disque d'extrémité isolant (3) et la face frontale opposée (51) du collecteur, une douille (4) pouvant être aplatie axialement et agencée sous la forme d'un composant séparé et que cette douille est aplatie au moyen du refoulement du collecteur (5) sur une distance précise.

3. Procédé pour fabriquer un moteur à collecteur, dont l'arbre (1) du rotor comporte un revêtement isolant dans la zone située entre un disque d'extrémité isolant (3) recouvrant la face frontale (21) du paquet rotorique et comportant un collet moulé en forme de douille (31), qui fait saillie axialement et entoure l'arbre du rotor, et la face frontale opposée (51) du collecteur, caractérisé par le fait qu'on emmanche, sur l'arbre (1) du rotor, en tant que revêtement isolant entre le collet (31) entourant l'arbre (1) du rotor et la face frontale opposée (51) du collecteur, une douille (4) pouvant être aplatie axialement, entourant l'arbre (1) du rotor et réalisée sous la forme d'un composant séparé, et que cette douille est aplatie au moyen du refoulement du collecteur (5) sur une distance précise.

4. Procédé suivant l'une des revendications 1 à 3, caractérisé par le fait qu'on emmanche axialement, sur l'arbre (1) du rotor, à partir de l'extrémité libre de ce dernier, une douille (4) fermée dans la direction circonférentielle, en tant que revêtement isolant.

5. Procédé suivant la revendication 2, caractérisé par l'utilisation d'une douille (4) pouvant être aplatie axialement et formée par moulage d'un seul tenant avec le disque d'extrémité isolant (3).

6. Procédé suivant la revendication 3, caractérisé par l'utilisation d'une douille (4) pouvant être aplatie axialement, qui est formée d'un seul tenant par moulage sur le collet (31), qui fait saillie axialement et entoure l'arbre (1) du rotor, du disque d'extrémité isolant (3).

7. Procédé suivant la revendication 3 et/ou 6, caractérisé par l'utilisation d'une douille (4) pouvant être aplatie axialement et possédant une épaisseur de paroi réduite radialement par rapport au collet (31) du disque d'extrémité isolant (3).

8. Procédé suivant l'une des revendications 1 à 7, caractérisé par l'utilisation d'une douille (4) pouvant être aplatie axialement et possédant une épaisseur radiale de paroi plus faible au niveau de son extrémité voisine du collecteur, qu'au niveau de sa partie formée par moulage sur le collet (31) du disque d'extrémité isolant (3).

9. Procédé suivant la revendication 8, caractérisé par l'utilisation d'une douille (4) pouvant être aplatie axialement, possédant une épaisseur radiale de paroi continument variable entre son extrémité voisine du collecteur, d'une part, et son extrémité voisine du paquet du rotor, d'autre part.

FIG 1

FIG 2

FIG 3

FIG 4